# EUROPEAN PATENT APPLICATION

(11) **EP 2 422 900 A1**
(43) Date of publication of application: **29.02.2012**
(21) Application number: 10008879.8
(22) Date of filing: 26.08.2010
(51) Int. Cl.: B22D 2/00, B22D 11/16, B22D 11/18, B22D 11/20, B22D 11/22, G01K 1/02, G01K 11/26, G01L 1/16, G01S 13/75

(54) **Arrangement for measuring physical parameters in continuous casting moulds**

(71) Applicant: SMS Concast AG, 8027 Zürich (CH)
(72) Inventor: Cestari, Luca, 33030 Campoformido (UD) (IT); Michelon, Guido, 34170 Gorizia (GO) (IT); Sgrò, Antonio, 33010 Reana del Roiale (UD) (IT); Binder, Alfred, 9523 Landskron (AT); Fachberger, René, 9500 Villach (AT)
(74) Representative: Luchs, Willi

(57) **Abstract**

Continuous casting moulds used in automated installations casting metal melts into strands require comprehensive, reliable real-time monitoring. Currently used systems are susceptible to damage and limited to just a few sensors, as arrangements involving a higher number of sensors have proven impractical due to the substantial effort they cause when exchanging a mould. To overcome this obstacle it is suggested to use wirelessly interrogable passive surface acoustic wave (SAW) sensors for monitoring of physical parameters in continuous casting moulds, and install at least one wireless link section in the signal path between SAW sensors and their reader devices. Continuous casting moulds thus become easily exchangeable with their sensors installed, making it industrially practicable to equip continuous casting moulds with a significantly higher number of sensors than previously feasible.

## Description

### Field of the Invention

The invention relates to an arrangement of sensor devices for distributed real-time measuring of physical parameters, in particular temperatures, mechanical strains and/or pressures, in an easy-to-install continuous metal casting mould.

Embodiments of the invention allow acquiring data that can be used for instance to monitor initial casting, control the melt level in the mould and/or serve as early-stage fault detectors, sensing e.g. strand choking or sticking, the wear and tear status of the mould and/or the solidification of the outer metal shell of the cast strand in the mould.

### Background of the Invention

In continuous casting, liquid metal is continuously poured into a cooled open-ended mould, causing a thin shell of the cast metal to solidify next to the cavity wall before the metal strand exits the mould bottom. This process is nowadays almost invariably fully automated and computer-controlled, requiring precise, real-time capable sensors monitoring the mould. Of particular relevance are continuous measurements of mould temperatures and the cast meniscus throughout the casting process. Also of high practical interest would be sensors monitoring for instance the pressures and/or strains in the cast cavity.

The demands on such sensors are high: they have to be fully operational in heavy industry environments, non-sensitive to electromagnetic interferences, feature response times of typically ≤ 10 ms, remain operational at temperatures exceeding 200°C and above, and be able to withstand both process-induced vibrations and the oscillatory mould movements commonly used to prevent strand choking. Furthermore, as it is common practice to use different moulds temporarily installed in stationary cast stands and exchange them as necessary, the casting moulds, and with them their respective sensors, have to be easily interchangeable.

Most state-of-the-art temperature monitoring systems for continuous casting moulds use thermocouples. A number of such arrangements have been previously disclosed, e.g. in US 3204460, US 3745828, DE-A1 3436331 and WO-A1 2004/082869. A critical problem with all these solutions is that each thermocouple requires at least one electrical connection. Exchanging a casting mould thus means disconnecting each sensor, correctly connecting the sensors in the other mould, and assigning the appropriate calibration functions to the different measurement positions. Especially with increasing numbers of sensors, this creates an impractical work effort and adds a potential error source. Furthermore, industrial practice shows that sensor cables and connectors are easily damaged during handling or in storage. Together, these factors severely limit the practical applicability of thermocouple solutions in continuous casting moulds.

The same objections apply to other previously suggested solutions, including fibre-optic temperature sensors, all of which require some sort of electrically or optically conductive connection between the sensor(s) and the reader(s). Although for instance WO-A1 2010/012468 achieves spatially resolved temperature sensing with good measurement dynamics using a minimised number of signal connectors. Optical systems are still potentially problematic in heavy industry environments.

Currently, industrially applied moulds for metal strand casting are usually equipped with *i*) a small number of thermocouples connected to the data acquisition system through a single industrial or MIL-standard connector, and *ii*) a dedicated melt meniscus detector, typically based on radioactive or eddy-current effect measurements. Such solutions obviously forgive substantial potential.

The invention disclosed herein aims at overcoming these limitations and thus significantly improving the surveillance and process control capabilities in metal strand casting.

Embodiments of the invention provide industrially applicable, robust arrangements enabling the implementation of multiple physical sensors measuring temperatures, strains and/or other physical parameters at numerous different locations in continuous casting moulds.

### Summary of the Invention

Embodiments of the invention described herein are based on the central inventive idea to use surface acoustic wave (SAW) devices to monitor continuous casting moulds for metal casting.

A first key advantage of this solution is that SAW devices can be designed for wireless interrogation, allowing to insert at least one wireless section in the signal line between a sensor and its reader. The currently necessary physical connections are thus replaced by RF transmission links. The ensuing elimination of electrical or optical connectors facilitates a simple exchange of the mould with its sensors installed.

A second key advantage of SAW sensors is that these devices can, in contrast to other wirelessly operable sensing devices, be designed for reliable long-time operation also at temperatures significantly exceeding 200°C. The proposed solution thus fulfils an indispensable prerequisite of sensor systems operating in or near metal melt casting moulds. In addition, the fully passive mode of operation makes SAW sensors virtually maintenance-free.

A further advantage is that SAW devices can be equipped with unique identification (ID) codes that can be read wirelessly together with the sensor signals. This optional RFID functionality allows a non-ambiguous identification of single sensors, which can be used for instance to assign associated calibration functions and/or to clearly identify the installed casting mould through its sensors' ID codes.

It is thus presented a solution that allows equipping industrially used continuous casting moulds with a significantly higher number of sensors than currently practical. The increased amount of available sensor information consequently enables e.g. *i*) a precise control of cast levels directly through measurement of the temperature, i.e. without radioactive detectors, *ii*) an improved control of initial casting, *iii*) monitoring early stages of strand choking in the mould and/or iv) an on-line surveillance of the solidification of the strand shell.

Surface acoustic wave (SAW) sensors, as used for measuring physical quantities in continuous casting moulds according to the present invention, have three complementary-unique properties that are essential to the proposed application:
1. SAW sensors can be designed and built for wireless operation. This is vital for industrially applied continuous casting moulds since it offers a feasible workaround to the present limitation to the number of cable-bound sensors installable with acceptable effort.
2. Unlike most alternative wireless sensor systems, SAW sensors can be operated fully passively, i.e. they are powered entirely by the energy of the interrogation signal and do hence not require an internal power supply, e.g. a battery or the like. This makes SAW sensors entirely maintenance-free, with operational lifetimes well exceeding the typical lifetimes of casting moulds.
3. Uniquely for all established wirelessly interrogable sensor systems, passive or otherwise, SAW sensors can be designed and built for long-time operation also at temperatures exceeding 200°C, as required by the application conditions in mould cavity walls used for metal casting.

The resulting combination of wireless signal transmission capability over at least a part of the signal line between sensor and reader, fully passive maintenance-free operation and high-temperature applicability for use in continuous casting moulds is unique to the novel arrangement disclosed herein.

The novel features and advantages of the invention will best be understood from the accompanying drawings exemplifying different embodiments of the invention for different application and/or installation scenarios. It shows:
- Fig. 1: illustrates schematically an arrangement for measuring physical parameters in continuous casting moulds according to the invention,
- Fig. 2: illustrates schematically a second embodiment of an arrangement,
- Fig. 3: shows a longitudinal cross section through an example vertical cast mould for casting molten metal into metal strands,
- Fig. 4: shows another longitudinal cross section through an example vertical cast mould,
- Fig. 5: illustrates schematically an installation example according to the invention, and
- Fig. 6: displays another installation example of an arrangement with multiple sensors integrated into a mould cavity wall.

### Detailed Description of the Invention

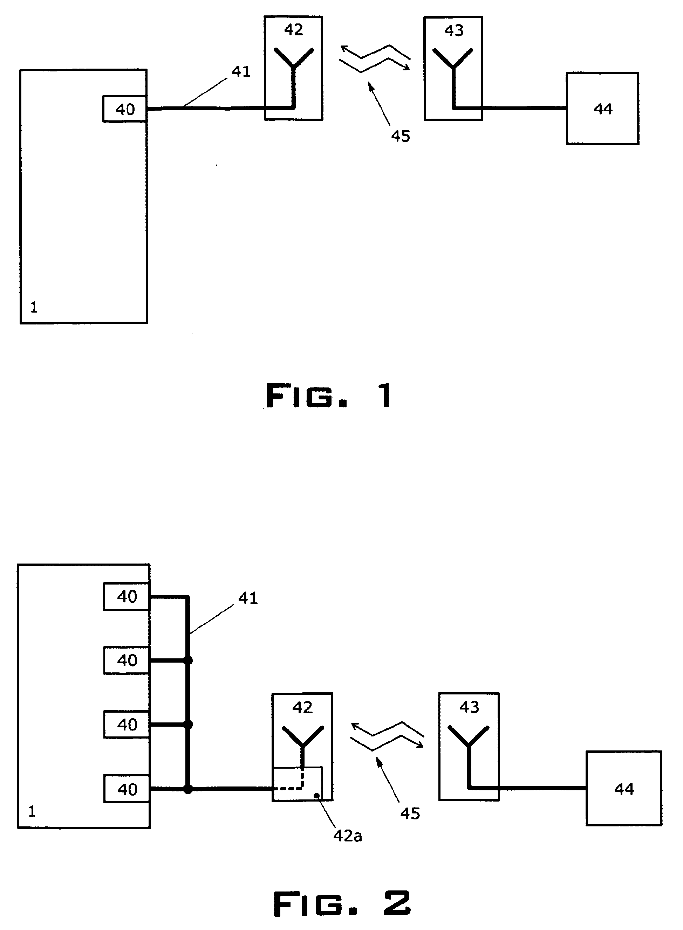

Fig. 1 illustrates a continuous casting mould (1) with an arrangement according to the invention, comprising a passive wirelessly interrogable surface acoustic wave (SAW) device for measuring physical parameters in a continuous casting mould. Such a SAW sensor (40), which is electrically connected to a sensor-sided antenna (42) via a suitable RF transmitting line (41), preferably a coaxial cable optimised for the frequencies used. The sensor-sided antenna (42) faces a corresponding reader-sided antenna (43) that is connected to a suitable SAW sensor reader device (44), forming a radio link (45) within the signal line. For the proposed application the lengths of the radio links are typically in the range 5 - 500 mm; other distances can easily be devised and realised within the scope of the invention. In operation, the SAW reader (44) emits an RF interrogation signal that is transported through the entire signal line to the sensor (40), causing it to generate a response signal containing the sensor information, and optionally also an ID-code. This response is then transmitted back through the same signal line to the SAW reader, recorded and transformed into a sensor reading, e.g. a temperature value.

For envisaged multi-sensor applications, this fundamental embodiment of the invention can be adapted to allow for multiple wirelessly interrogable SAW sensors, for instance by multiplying the arrangement according to Fig. 1 by the number of SAW sensors to be installed. Each SAW sensor is thus connected to its own sensor-sided antenna, and the various reader-sided antennae are connected either to separate SAW readers or, preferably, connected to one central SAW. reader e.g. via a suitable multiplexer.

The in-operation performance of such arrangements is critically limited by crosstalk interferences between different sensors. This can be significantly improved and controlled by implementing suitable anti-collision protocols.

Systems involving multiple antenna pairs can benefit in particular from space domain multiplexing (SDM, also SDMA) methods, including, but not limited to, *i*) spacing different antenna pairs sufficiently apart to avoid unintended overlaps of the send/receive fields, *ii*) using antennae with matching, suitably shaped narrow send/receive fields and/or *iii*) the use of alternating polarisation, e.g. vertical I horizontal or left circular I right circular, for neighbouring antenna pairs.

Still, with increasing numbers of sensors the parity between the number of sensors and the number of antenna pairs will eventually render this solution technically and/or economically unpractical. Thus, further embodiments of the invention (Fig. 2) allow connecting several SAW sensors (40) via a suitable RF transmitting line (41) to a joint sensor-sided antenna (42), and through that to an SAW reader (44). For practical applications such sensor lines connecting two or more SAW sensors to one antenna can be realised preferably by using a coaxial cable equipped with T-pieces and branch lines at the appropriate sensing positions. The passive impedance matching circuitry (42a) necessary for connecting multiple passive SAW devices essentially in parallel to one antenna is preferably integrated into the antenna (42). Other possible, application-specifically advantageous embodiments, e.g. the use of multiple coaxial cables connecting the single SAW sensors to the joint antenna or the implementation of at least parts of the passive impedance matching circuitry into the SAW sensors or/and the T-pieces, will be easily obvious to persons skilled in the art.

Employing such sensor lines to minimise the number of antenna pairs again requires implementing anti-collision techniques avoiding sensor crosstalk. Of particular relevance here are time domain multiplexing (TDM, also TDMA) and/or frequency domain multiplexing (FDM, also FDMA) techniques.

In TDM, the single SAW elements connected to a joint antenna are designed so that the sensor signals generated in response to a common interrogation signal are temporarily offset to each other. Each sensor thus has its own, hardware-encoded designated time window(s) in which to transmit back the sensor signals, i.e. the sensor readings and eventual ID codes.

In FDM, the single SAW devices connected to a joint sensor-sided antenna are designed for different operation frequencies. The SAW reader now basically emits a wide-range frequency sweep signal scanning the entire pre-set operation range of the connected SAW sensors. With each sensor responding only within its specific, design-determined frequency band, the individual sensors in a line can thus be differentiated. This method can be particularly useful for application in continuous casting moulds, as mould and casting stand can be designed to together form a closed area, essentially a Faraday cage, in which the sensor signals are wirelessly transmitted. The frequency range can thus be freely chosen according to the demands of the used SAW materials and designs, and is not restricted to certain legally prescribed frequency bands and/or RF power levels, as is the case when transmitting through open air.

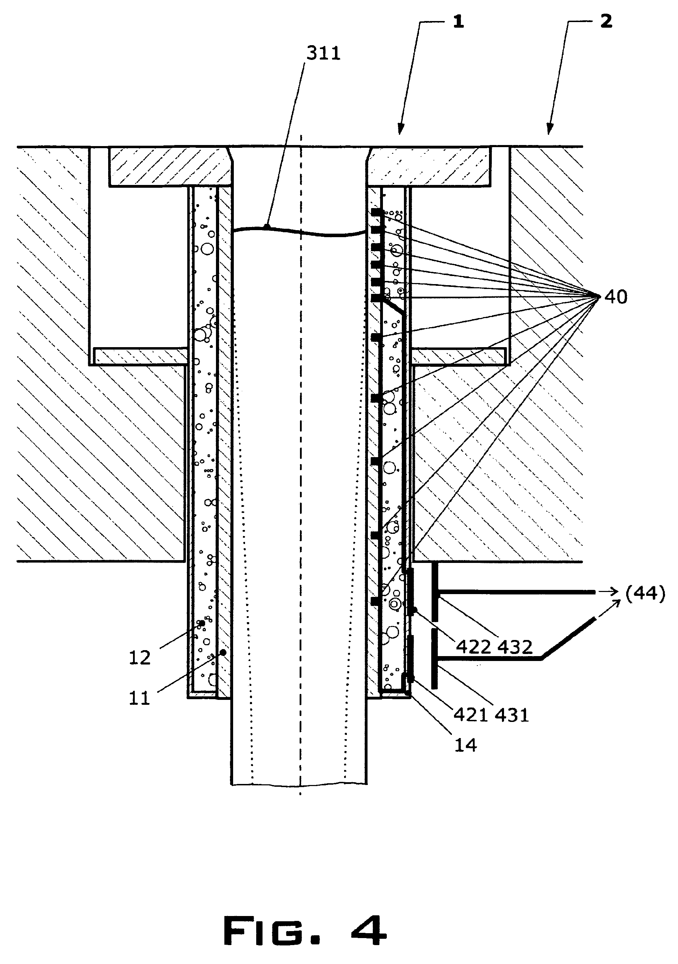

Depending primarily on the design of the signal-generating SAW elements, the chosen operation frequency band(s) and/or the specific multiplexing and de-multiplexing protocols used, these methods typically allow connecting up to between 4 and 10 separate SAW sensors to one joint antenna. To further increase the number of sensors that can be installed in an easily exchangeable continuous cast mould it is possible and often advantageous to combine different anti-collision techniques. Such a preferred embodiment of the invention combining TDM and/or FDM anti-collision with SDM anti-collision to increase the number of SAW sensors is illustrated in Fig. 4 for two different sensor lines. In this example embodiment, each sensor line features multiple SAW sensors (40) anti-collision in their respective lines using TDM or/and FDM techniques. All SAW sensors in a sensor line are connected to a joint sensor-sided antenna (421, 422), each of which faces a corresponding reader-sided antenna (431, 432). Crosstalk between the two, in other embodiments also more, antenna pairs, and hence the SAW sensors in the different sensor lines, can be controlled using the SDM techniques outlined before.

An important practical advantage of the present invention is that SAW sensors can be designed for measuring a wide range of different physical parameters while still sharing a common sensor platform. Thus, one SAW reader system can be used to interrogate multiple SAW sensors, even for different physical parameters. Of particular interest for use in continuous casting moulds are SAW sensors measuring temperature and/or mechanical parameters, for instance pressure, mechanical strain and/or forces. It is also possible to design and use SAW sensors that simultaneously measure more than one parameter, e.g. temperature and strain, in one sensing device.

The fundamental operational principle of the SAW elements employed is of no fundamental importance with respect to the invention, i.e. the invention is not limited to specific SAW sensor designs, SAW interrogation principles and/or data evaluation algorithms. Specific applications, however, may narrow down the choice. For instance, when requiring SAW sensors with integrated ID-codes, allowing e.g. to unambiguously identify a sensor and assign the correct calibration function in data processing, delay-line type SAW sensors are preferable to alternative sensor designs.

A first example application for the use of multiple SAW sensors in a continuous casting mould is the measurement of the melt or cast level, i.e. the position of the melt lubricant or melt/slag interface (311) in the mould. The cast level is a key process parameter that needs to be precisely and continuously monitored in real-time.

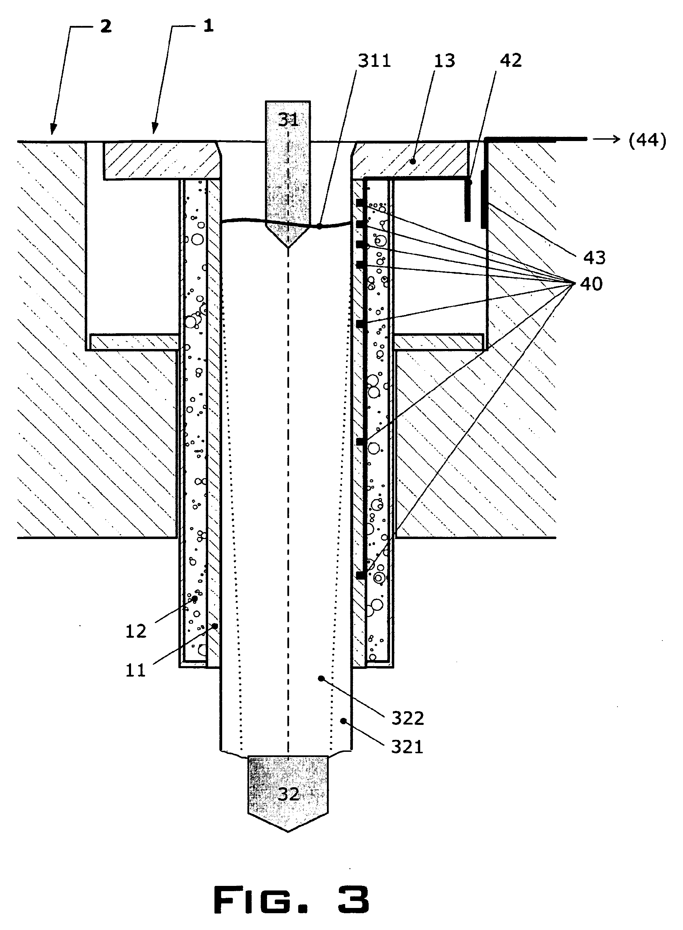

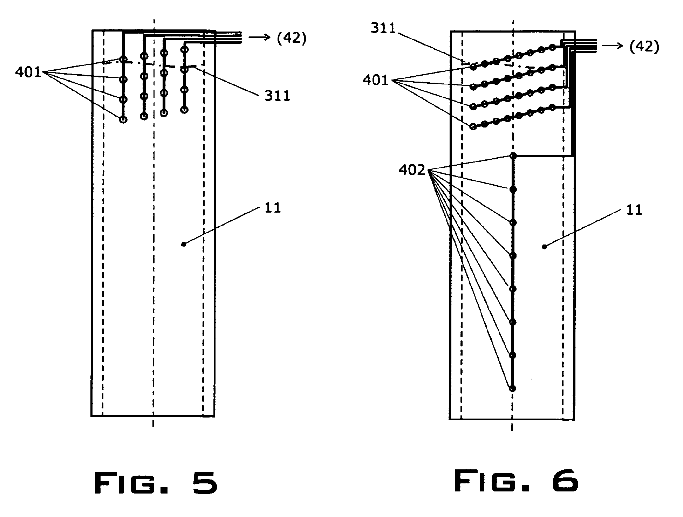

Suitable embodiments of the invention for this application comprise SAW temperature sensors installed in the mould walls (11) within the melt level range of the continuous casting mould (1), as indicated in Fig. 3 - Fig. 6. Embodiments suitable for this purpose include arrangements of multiple SAW temperature sensors in single vertical columns. In case such a column does not yield a sufficiently high spatial resolution, further embodiments arrange the SAW temperature sensors (401) in parallel columns (Fig. 5) or slanting lines (Fig. 6) covering the relevant area(s). These or similar sensor patterns can also be installed, vertically and/horizontally offset to each other by a fraction of the grid pitch(s), in opposing walls of the mould. When combining the sensor data this yields a spatially highly resolved sensor grid without unduly compromising the static integrity of the mould walls by too many closely spaced invasive sensor accommodations.

The combined SAW temperature sensor readings of these embodiments allow generating mould wall temperature profiles that can, eventually after data pre-processing like the calculation of a derivative function, be correlated in real-time to the current position of the cast level in the mould.

A closely related second application example is the measurement of the shape of the meniscus formed in the mould during casting. As outlined e.g. in WO-A1 2010/012468, the meniscus forms a standing wave whose shape is directly related to the casting velocity; measuring the shape thus yields a direct, reliable reading of the actual flow of molten metal from the tundish into the mould. Two-dimensional sensor grids with at least three measurement points in horizontal direction, like the embodiments exemplified in Figs. 5 and 6, can thus be used to measure the casting speed, further improving process control of continuous casting processes.

Provided sufficiently high sensor dynamics, the arrangements shown for the measurement of cast level position and/or shape can also be used to monitor initial casting, i.e. the start of a cast. In this process step, the mould walls (11) heat up from the temperature of the coolant (12) to standard casting temperatures within a few seconds as the mould is filled with molten metal (31). Following this and the subsequent transition to the continuous casting process requires read intervals in the low millisecond range, typically 5 - 20 ms or better. With SAW technologies this can be best achieved using either *i*) resonator-type SAW sensors or *ii*) delay-line type SAW sensors interrogated by FMCW (frequency modulated continuous wave) radar signals.

SAW temperature sensors can also be used to check for early indications of developing fault states. The most important example is strand choking to (portions of) the cavity walls instead of moving downwards and forming a strand. This can be sensitively detected by temperature sensor grids inset into the mould cavity walls, as even in the early stages of a cast choke adherent metal changes the temperature distributions in comparison to the standard process conditions.

As both these applications typically involve the evaluation of signal transients over time, it may also be advantageous to employ temperature sensor arrangements in which the installation depths of the single SAW sensors in the mould cavity wall are staggered, following the principle of the thermocouple arrangement shown in WO-A1 2004/082869. The heat conduction in the typically copper-based mould cavity walls creates a temporal offset in the temperatures sensed by the SAW sensors installed at, at least two, different distances to the heat source, i.e. the liquid metal. Using appropriate data evaluation algorithms, this effect can be used to sensitively detect changes in the mould status.

SAW sensors can also be applied to great effect in the solidification zone of the mould where the cast strand forms a solid shell before leaving the mould. In particular the thickness of the shell is an important parameter here, as the still liquid melt in the strand's core could break through too-thin a shell after the mould, causing spillage of hot liquid metals and a turnaround. The thickness of the solid strand shell could be inferred from temperature measurements and/or from the measurement of the pressure in the mould. Such pressure measurements, which could also serve e.g. as an extra indicator for strand choking, can be achieved through direct measurement of the pressure in the cavity, or by measuring the mechanical strain in the cavity walls. It is also conceivable to employ previously shown SAW sensor designs that combine temperature and pressure respectively temperature and strain sensing functionalities in one element.

Further possible, typically secondary, applications of SAW sensors in continuous casting moulds include a monitoring of the wear and tear status of the mould, with increased wear of the inner cavity surface resulting in deviating temperature readings and/or increased (pre-)sticking event frequency. Also, since many modern casting moulds use an arrangement of stationary and flexible cavity walls, strain and force sensors may also be used to efficiently monitor and control such installations.

The actual physical implementation of SAW sensors according to this disclosure can be flexibly adapted to the specific needs and installation conditions. For monitoring of the cast level and/or initial casting it is usually sufficient to install a sufficient number of SAW temperature sensors (401) just in the cast level section of the mould, as shown in Fig. 5. When aiming at monitoring also physical parameters in the lower cooling section, these sensors (402) can be installed for instance as shown in Fig. 6.

Similarly, the bidirectional data link(s) (45) between sensor-sided antennae (42, 421, 422) affixed to the mould (1) and reader-sided antennae (43, 431, 432) mounted to the cast stand (2) can be positioned as necessary and advantageous for the process. Fig. 3 illustrates an example where the antennae (42, 43) are arranged in an inner volume formed by the mould and its cast stand. The antennae can be designed quite massive and robust to make them resistant against damage during handling and storage. As exemplified in Fig. 4, the antennae can also be advantageously integrated into existing parts of the mould, like the outer casing (14).

Beyond the exemplifying embodiments shown, it is apparent to one skilled in the art that various changes and modifications can be made to this disclosure, and equivalents employed, without departing from the spirit and scope of the invention. Elements shown with any embodiment are exemplary for the specific embodiment and can be used on other embodiments within this disclosure.

## Claims

1. Arrangement for measuring physical parameters in a continuous casting mould, in particular such used for metal strand casting, **characterised by**
the use of at least one passive surface acoustic wave (SAW) device for measuring physical parameters.

2. Arrangement according to Claim 1, ***characterised by*** the surface acoustic wave (SAW) devices having preferably several sensors and readers and at least one wireless link in the signal path(s) between each sensor and its reader, where the sensors are installed in the exchangeable mould and the readers in the stationary cast seat.

3. Arrangement according to Claim 1 or 2, ***characterised by*** the use of SAW devices measuring temperature.

4. Arrangement according to Claim 1 or 2, ***characterised by*** the use of SAW devices measuring a mechanical parameter, in particular strain, force or pressure.

5. Arrangement according to Claim 1 or 2, ***characterised by*** the use of SAW devices simultaneously measuring temperature and a mechanical parameter, in particular strain, force or pressure.

6. Arrangement according to Claim 1 or 2, ***characterised by*** the use of SAW sensors, preferably of the delay line-type, that transmit an identification (ID) code tagging the respective sensor together with the sensor signal(s).

7. Arrangement according to anyone of the Claims 1 to 6, ***characterised by*** electrically connecting several SAW sensors to one joint sensor-sided antenna that receives read signals interrogating the connected SAW sensors and broadcasts the SAW sensors' signals generated in response to the interrogation signal(s) back to the SAW reader.

8. Arrangement according to Claim 7, ***characterised by*** the use of time domain multiplexing methods hardware-encoded into all SAW-sensors connected to one joint sensor-sided antenna to control sensor crosstalk.

9. Arrangement according to Claim 7, ***characterised by*** the use of frequency domain multiplexing methods hardware-encoded into all SAW-sensors connected to one joint sensor-sided antenna to control sensor crosstalk.

10. Arrangement according to anyone of the Claims 1 to 9, ***characterised by*** involving at least two separate sensor-sided antennae, the use of space domain multiplexing to control crosstalk between different wireless signal links.

11. Arrangement according to anyone of the Claims 1 to 10, ***characterised by*** the mould and its stand forming a closed volume functioning essentially as a Faraday cage in which the sensor-sided antenna(e) and the reader-sided antenna(e) are located.

12. Arrangement according to anyone of the Claims 1 to 11, ***characterised by*** determining the position and/or the shape of the casting meniscus inside the mould in real-time, using a line or grid of SAW temperature sensors installed in at least one wall of the mould and evaluating the thus acquired temperature profiles in the mould wall(s).

13. Arrangement according to anyone of the Claims 1 to 12, ***characterised by*** monitoring and/or controlling initial casting in real-time, using a line or grid of SAW temperature sensors installed in at least one wall of the mould and evaluating the temperature profiles in the mould wall(s) and their temporal development over the process.

14. Arrangement according to Claim 13, ***characterised by*** the use of resonator-type SAW temperature sensors interrogable in 20 ms or less.

15. Arrangement according to Claim 13, ***characterised by*** the use of delay line-type SAW temperature sensors interrogated by an FMCW-type SAW reader within 20 ms or less.

16. Arrangement according to anyone of the Claims 1 to 15, ***characterised by*** monitoring for developing fault states in the mould cavity, in particular strand choking, using a line or grid of SAW temperature sensors installed in at least one wall of the mould and evaluating the thus acquired temperatures in the mould wall(s) over time.

17. Arrangement according to Claim 16, ***characterised by*** additionally using SAW sensors measuring mechanical quantities, in particular pressure or strain, to detect early stages of fault states in the mould.

18. Arrangement according to anyone of the Claims 1 to 17, ***characterised by*** SAW sensors for monitoring the solidification of the strand's shell over the height of the casting mould, using a set of SAW temperature sensors measuring the mould wall temperatures and of mechanical SAW sensors measuring the strain in the walls of the solidification section of the mould.
